# EUROPÄISCHE PATENTSCHRIFT

(11) **EP 1 640 131 B1**
(45) Veröffentlichungstag und Bekanntmachung des Hinweises auf die Patenterteilung: **17.06.2009**
(21) Anmeldenummer: 05107353.4
(22) Anmeldetag: 10.08.2005
(51) Int. Cl.: B29C 33/04, B29C 33/38

(54) **Warmformwerkzeug**
Thermoforming mould
Moule de thermoformage

(30) Priorität: 17.09.2004 DE 102004045155
(43) Veröffentlichungstag der Anmeldung: 29.03.2006
(73) Patentinhaber: Benteler Maschinenbau GmbH, 33602 Bielefeld (DE)
(72) Erfinder: Vinnen, Martin, 33818, Leopoldshöhe (DE); Stockter, Robert, 30177, Hannover (DE); Knaup, Hans Jürgen, 33175, Bad Lippspringe (DE)
(74) Vertreter: Dantz, Jan Henning

(56) Entgegenhaltungen:
- EP-A- 1 254 751
- DE-A1- 1 779 208
- US-A- 3 249 672
- US-A- 3 723 585
- US-A- 3 733 161
- US-A- 4 872 827
- US-A- 5 190 715
- US-A- 5 744 173
- US-A- 6 099 285

## Beschreibung

Die vorliegende Erfmdung betrifft ein Warmformwerkzeug mit einem Ober- und einem Unterwerkzeug, wobei sowohl das Ober- wie auch das Unterwerkzeug jeweils aus einer Grundplatte mit einer daran festgelegten Formbacke und einem ebenfalls an der Grundplatte festgelegten Kern bestehen und zwischen dem Kern und der dem Kern zugewandten Rückseite der Formbacke ein Kanalsystem zur Durchleitung eines Kühlmittels ausgebildet ist.

Warmformwerkzeug der vorerwähnten Art sind an sich bekannt (siehe z.B. die JP-A-60 172507).

Die US-A-3 249 672 offenbart ein Formwerkzeug zum Blasformen von Hohlkörper aus Kunststoff.

Bei den bekannten Warmformwerkzeugen werden die Formbacken bislang ausschließlich auf mechanischem Wege hergestellt.

Dabei waren bislang zur Herstellung der Formbacken folgende Arbeitsschritte notwendig:
1. 6-seitige Grundbearbeitung eines als Rohling dienenden Formstückes
2. Vorfräsen der Formkontur und Einbringen von Befestigungslöchern zur Festlegung der fertig gestellten Formbacke an einer Grundplatte
3. Einbringen des Kühlkanalsystems durch Fräsen und/oder Tieflochbohren
4. Wärmebehandlung (Härten)
5. Schleifen auf Endmaß
6. Erodieren
7. HSC-Fräsen der Außenkontur

Diese Art der Herstellung von Formbacken ist aufgrund des hohen Anteiles an zerspanender Fertigung sowohl sehr zeitaufwendig wie auch kostenintensiv.

Der vorliegenden Erfindung liegt die Aufgabe zugrunde, ein Warmformwerkzeug der gattungsgemäßen Art zu schaffen, dessen Herstellkosten im Vergleich zur bisher angewandten Fertigungsmethode wesentlich geringer sind.

Diese Aufgabe wird erfindungsgemäß dadurch gelöst, dass zumindest die Formbacken als Gussteile ausgebildet sind.

Durch die Herstellung der Formbacken als Gussteile wird die erforderliche mechanische (zerspanende) Bearbeitung der Formbacken reduziert auf die Bearbeitung der Aufspannflächen (= Auflageflächen an den Grundplatten) und das HSC-Fräsen der Außenkontur nach der Wärmebehandlung.

Dadurch können die Fertigungskosten für ein Warmformwerkzeug erheblich gesenkt werden, ohne das damit Nachteile oder Beeinträchtigungen hinsichtlich des Kühlsystemes in Kauf genommen werden müssen.

Weitere Merkmale der Erfindung sind Gegenstand von Unteransprüchen.

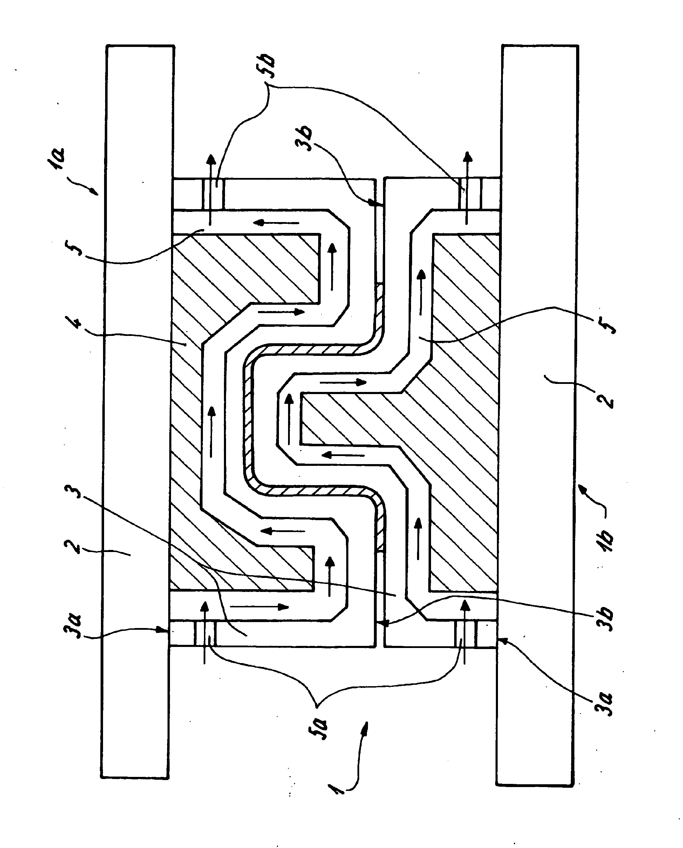

In der beigefügten Zeichnung ist ein Ausführungsbeispiel der Erfindung gezeigt, welches im folgenden näher beschrieben wird.

Die Zeichnung zeigt einen schematisch dargestellten Schnitt durch ein Warmformwerkzeug mit einem Kanalsystem zur Durchleitung eines Kühlmittels.

In der Zeichnung ist mit dem Bezugszeichen 1 insgesamt ein Warmformwerkzeug bezeichnet, welches ein Ober- und ein Unterwerkzeug 1a und 1b umfasst.

Sowohl das Oberwerkzeug 1a wie auch das Unterwerkzeug 1b bestehen jeweils aus einer Grundplatte 2, einer daran befestigten Formbacke 3 und einem Kern 4, der ebenfalls an der Grundplatte 2 befestigt ist.

Zwischen dem Kern 4 und der dem Kern 4 zugewandten Rückseite der jeweiligen Formbacke 3 ist ein Kanalsystem 5 zur Durchleitung eines Kühlmittels, beispielsweise zur Durchleitung von Kühlwasser, ausgebildet.

Dabei kann das Kühlmittel jeweils durch einen Zufluss 5a in das Kanalsystem 5 einströmen und über einen Abfluss 5b aus dem Kanalsystem 5 austreten.

Die Formbacken 3 des Warmformwerkzeuges 1 sind als Gussteile ausgebildet, so dass die Kontur der Formbacken 3 zur Bildung des Kanalsystems 5 im Gießverfahren gebildet sind und diesbezüglich keine mechanische spanabhebende Bearbeitung mehr erforderlich ist.

Eine spanabhebende Bearbeitung der Formbacken 3 ist lediglich erforderlich im Bereich der Aufspannflächen 3a sowie der einander gegenüberliegenden Außenflächen 3b der Formbacken 3.

Die jeweiligen Kerne 4 können prinzipiell auch als Gussteile ausgebildet sein, können aber bei Bedarf auch spanabhebend gefertigt sein, wobei im letzteren Falle von Vorteil ist, wenn die Kerne 4 aus einem mechanisch leicht zu bearbeitenden Material wie z. B. aus Aluminium bestehen.

Die Formbacken 3 bestehen vorteilhafter Weise aus einem hochfesten Werkzeugstahl.

Durch die Ausbildung der Formbacken 3 als Gussteile werden die Herstellkosten für ein Warmformwerkzeug 1 erheblich gesenkt, da ein beträchtlicher Teil an zerspanender Bearbeitung für deren Herstellung erübrigt wird. Dies betrifft im speziellen die Konturgebung der Formbacken im Bereich der Kanalsysteme 5.

## Patentansprüche

1. Warmformwerkzeug (1) mit einem Ober- und einem Unterwerkzeug (1a, 1b), wobei sowohl das Ober- wie auch das Unterwerkzeug (1a, 1b) jeweils aus einer Grundplatte (2) mit einer daran festgelegten Formbacke (3) und einem ebenfalls an der Grundplatte (2) festgelegten Kern (4) bestehen und zwischen dem Kern (4) und der dem Kern (4) zugewandten Rückseite der Formbacke (3) ein Kanalsystem (5) zur Durchleitung eines Kühlmittels ausgebildet ist, **dadurch gekennzeichnet, dass** zumindest die Formbacken (3) als Gussteile ausgebildet sind.

2. Warmformwerkzeug nach Anspruch 1, **dadurch gekennzeichnet, dass** die Kerne (4) jeweils aus einem mechanisch leicht zu bearbeitenden Metall, z. B. aus Aluminium, bestehen.

3. Warmformwerkzeug nach Anspruch 1 oder 2, **dadurch gekennzeichnet, dass** die Formbacken (3) aus hochfestem Werkzeugstahl bestehen.

4. Warmformwerkzeug nach einem der vorhergehenden Ansprüche, **dadurch gekennzeichnet, dass** die Formbacken (3) auf ihren einander zugewandten Außenseiten (3b) mechanisch und/oder durch Erodieren bearbeitet sind.

5. Warmformwerkzeug nach einem der vorhergehenden Ansprüche, **dadurch gekennzeichnet, dass** die Formbacken (3) jeweils mit mindestens einem in das Kanalsystem (5) führenden Zufluss (5a) und jeweils mit mindestens einem aus dem Kanalsystem (5) herausführenden Abfluss (5b) ausgestattet sind.

## Claims

1. Hot-forming tool (1) having a top and a bottom die (1a, 1b), wherein both the top and the bottom die (1a, 1b) each consist of a base plate (2) having a forming jaw (3) fixed thereto and a core (4) likewise fixed to the base plate (2), and a passage system (5) for passing a coolant through is formed between the core (4) and the rear side, facing the core (4), of the forming jaw (3), **characterized in that** at least the forming jaws (3) are designed as cast parts.

2. Hot-forming tool according to Claim 1, **characterized in that** the cores (4) are each made of a metal which is easy to process mechanically, e.g. aluminium.

3. Hot-forming tool according to Claim 1 or 2, **characterized in that** the forming jaws (3) are made of high-tensile tool steel.

4. Hot-forming tool according to one of the preceding claims, **characterized in that** the forming jaws (3) are processed mechanically and/or by erosion on their outer sides (3b) facing one another.

5. Hot-forming tool according to one of the preceding claims, **characterized in that** the forming jaws (3) are each provided with at least one inlet (5a) leading into the passage system (5) and at least one outlet (5b) leading out of the passage system (5).

## Revendications

1. Outil de formage à chaud (1) avec un outil supérieur et un outil inférieur (1a, 1b), lesdits outil supérieur et outil inférieur (1a, 1b) étant composés chacun d'une plaque de base (2) avec une mâchoire de formage (3) fixée contre celle-ci et d'une âme (4) également fixée contre la plaque de base (2), et un système de canal (5) pour la conduction d'un réfrigérant étant formé entre l'âme (4) et la face arrière de la mâchoire de formage (3) opposée à l'âme (4), **caractérisé en ce qu'**au moins les mâchoires de formage (3) sont exécutées comme pièces moulées.

2. Outil de formage à chaud selon la revendication 1, **caractérisé en ce que** les âmes (4) sont réalisées chacune dans un métal mécaniquement facile à usiner, tel que, par exemple, l'aluminium.

3. Outil de formage à chaud selon la revendication 1 ou 2, **caractérisé en ce que** les mâchoires de formage (3) sont réalisées en acier à outils de haute résistance.

4. Outil de formage à chaud selon l'une des revendications précédentes, **caractérisé en ce que** les mâchoires de formage (3) sont usinées mécaniquement et/ou par érosion sur leurs faces extérieures (3b) opposées l'une à l'autre.

5. Outil de formage à chaud selon l'une des revendications précédentes, **caractérisé en ce que** les mâchoires de formage (3) sont pourvues chacune au moins d'un conduit d'amenée (5a) débouchant dans le système de canal (5), et chacune au moins d'un conduit d'évacuation (5b) débouchant du système de canal (5).
